# EUROPEAN PATENT APPLICATION

(11) **EP 4 786 332 A1**
(43) Date of publication of application: **05.08.2026**
(21) Application number: 26155846.4
(22) Date of filing: 02.02.2026
(51) Int. Cl.: B64C 11/46, B64D 27/12

(54) **CROSS DEBRIS PROTECTION FOR OPEN ROTOR PROPULSION SYSTEM(S)**

(30) Priority: 31.01.2025 US 202519042962
(71) Applicant: RTX Corporation, Farmington, CT 06032 (US)
(72) Inventor: SOBANSKI, Jon Erik, Glastonbury, 06033 (US); MORTON, Jeffrey T., Manchester, 06040 (US); BREAULT, Andrew E., Bolton, 06043 (US)
(74) Representative: Dehns

(57) **Abstract**

An aircraft propulsion system (24) is mounted to an aircraft airframe (22). An open propulsor rotor (66) of the propulsion system (24A) is configured to rotate about a rotational axis (54) in a rotational direction within a plane of rotation. The propulsor rotor (66) includes a propulsor blade (74) with a blade tip (80) and a blade span (152). The propulsor blade (74) is configured to rotate about the rotational axis (54) through a blade reference position (148A, 148B) in a reference direction towards a reference point (146A, 146B) on a fuselage (34). The propulsor blade (74) is oriented vertically at the blade reference position (148A, 148B). The blade tip (80) is vertically offset from the reference point (146A, 146B) by an offset distance (150A, 150B) when the propulsor blade (74) is at the blade reference position (148A, 148B). The offset distance (150A, 150B) is equal to or less than fifty percent of the blade span (152). The reference point (146A, 146B) is coincident with the plane of rotation at a vertical periphery of the fuselage (34).

## Description

### BACKGROUND OF THE INVENTION

### 1. Technical Field

This invention relates generally to an aircraft and, more particularly, to propulsion systems for the aircraft.

### 2. Background Information

Various types and configurations of aircraft propulsion systems are known in the art including those with one or more open propulsor rotors. While these known aircraft propulsion systems have various benefits, there is still room in the art for improvement.

### SUMMARY OF THE INVENTION

According to an aspect of the present invention, an aircraft is provided that includes an airframe and a first propulsion system. The airframe includes a longitudinally extending roll axis, a laterally extending pitch axis, a vertically extending yaw axis and a fuselage. The first propulsion system is mounted to the airframe to a lateral first side of the fuselage. The first propulsion system includes a first open propulsor rotor. The first open propulsor rotor is configured to rotate about a first rotational axis in a first rotational direction within a first plane of rotation. The first propulsor rotor includes a first propulsor blade with a first blade tip and a first blade span. The first propulsor blade is configured to rotate about the first rotational axis in the first rotational direction through a first blade reference position in a first reference direction towards a first reference point on the fuselage. The first propulsor blade is oriented vertically at the first blade reference position. The first blade tip is vertically offset from the first reference point by a first offset distance when the first propulsor blade is at the first blade reference position. The first offset distance is equal to or less than fifty percent of the first blade span. The first reference point is coincident with the first plane of rotation at a first vertical periphery of the fuselage.

According to another aspect of the present invention, another aircraft is provided that includes an airframe and a first propulsion system. The airframe includes a longitudinally extending roll axis, a laterally extending pitch axis, a vertically extending yaw axis and a fuselage. The first propulsion system is mounted to the airframe to a lateral first side of the fuselage. The first propulsion system includes a first open propulsor rotor and a first open guide vane structure next to the first open propulsor rotor. The first open propulsor rotor is configured to rotate about a first rotational axis in a first rotational direction within a first plane of rotation. The first propulsor rotor includes a first propulsor blade with a first blade tip. The first propulsor blade is configured to rotate about the first rotational axis in the first rotational direction through a first blade reference position in a first reference direction towards a first reference point on the fuselage. The first propulsor blade is vertical at the first blade reference position. The first blade tip is vertically offset from a centerline of the fuselage by a first blade tip distance when the first propulsor blade is at the first blade reference position. The first reference point is coincident with the first plane of rotation at a first vertical periphery of the fuselage. The first reference point is vertically offset from the centerline of the fuselage by a first reference point distance. The first blade tip distance is equal to or less than 1.3 times the first reference point distance.

According to another aspect of the present invention, another aircraft is provided that includes an airframe and a first propulsion system. The airframe includes a longitudinally extending roll axis, a laterally extending pitch axis, a vertically extending yaw axis and a fuselage. The fuselage has a mean vertical height along a centerline of the fuselage. The first propulsion system is mounted to the airframe to a lateral first side of the fuselage. The first propulsion system includes a first open propulsor rotor with an outer diameter that is equal to or greater than the mean vertical height. The first open propulsor rotor is configured to rotate about a first rotational axis in a first rotational direction within a first plane of rotation. The first propulsor rotor includes a first propulsor blade with a first blade tip. The first propulsor blade is configured to rotate about the first rotational axis in the first rotational direction through a first blade reference position in a first reference direction towards a first reference point on the fuselage. The first propulsor blade is vertical at the first blade reference position. The first blade tip is vertically offset from a centerline of the fuselage by a first blade tip distance when the first propulsor blade is at the first blade reference position. The first reference point is coincident with the first plane of rotation at a first vertical periphery of the fuselage. The first reference point is vertically offset from the centerline of the fuselage by a first reference point distance. The first blade tip distance is equal to or less than 1.3 times the first reference point distance.

The following optional features may be applied to any of the above aspects.

The aircraft may also include a second propulsion system mounted to the airframe to a lateral second side of the fuselage. The second propulsion system may include a second open propulsor rotor and an open guide vane structure next to the second open propulsor rotor. The second open propulsor rotor may be configured to rotate about a second rotational axis in a second rotational direction within a second plane of rotation wherein the second rotational direction is opposite the first rotational direction. The second propulsor rotor may include a second propulsor blade with a second blade tip. The second propulsor blade may be configured to rotate about the second rotational axis in the second rotational direction through the second blade reference position in a second reference direction towards the first reference point. The second propulsor blade may be vertical at the second blade reference position. The second blade tip may be vertically offset from the centerline of the fuselage by a second blade tip distance when the second propulsor blade is at the second blade reference position. The second blade tip distance may be equal to or less than 1.3 times the first reference point distance.

The first reference point may be vertically between the centerline of the fuselage and the first blade tip when the first propulsor blade is at the first blade reference position.

The first blade tip may be: vertically aligned with the first reference point when the first propulsor blade is at the first blade reference position; or vertically between the centerline of the fuselage and the first reference point when the first propulsor blade is at the first blade reference position.

The first propulsor blade may be configured to rotate about the first rotational axis in the first rotational direction through a second blade reference position in a second reference direction away from a second reference point on the fuselage. The first propulsor blade may be vertical at the second blade reference position. The first blade tip may be vertically offset from the centerline of the fuselage by a second blade tip distance when the first propulsor blade is at the second blade reference position. The second reference point may be coincident with the first plane of rotation at a second vertical periphery of the fuselage that is vertically opposite the first vertical periphery of the fuselage. The second reference point may be vertically offset from the centerline of the fuselage by a second reference point distance. The second blade tip distance may be greater than second reference point distance.

The first propulsor blade may be configured to rotate about the first rotational axis in the first rotational direction through a second blade reference position in a second reference direction away from a second reference point on the fuselage. The first propulsor blade may be vertical at the second blade reference position. The first blade tip may be vertically offset from the centerline of the fuselage by a second blade tip distance when the first propulsor blade is at the second blade reference position. The second reference point may be coincident with the first plane of rotation at a second vertical periphery of the fuselage that is vertically opposite the first vertical periphery of the fuselage. The second reference point may be vertically offset from the centerline of the fuselage by a second reference point distance. The second blade tip distance may be equal to or less than second reference point distance.

The first offset distance may be equal to or less than thirty percent of the first blade span.

The first offset distance may be equal to or less than ten percent of the first blade span.

A value of the first offset distance may be greater than zero.

A value of the first offset distance may be zero.

The first reference point may be located vertically between a centerline of the fuselage and the first blade tip when the first propulsor blade is at the first blade reference position.

The first blade tip may be located vertically between a centerline of the fuselage and the first reference point when the first propulsor blade is at the first blade reference position.

The first blade tip may be vertically aligned with the first reference point when the first propulsor blade is at the first blade reference position.

The first vertical periphery of the fuselage may be a top vertical periphery of the fuselage.

The first vertical periphery of the fuselage may be a bottom vertical periphery of the fuselage.

The first open propulsor rotor may have an outer diameter. The fuselage may have a vertical height at the first reference point that is equal to or less than the outer diameter.

The first open propulsor rotor may have an outer diameter. The fuselage may have a mean vertical height along a centerline of the fuselage that is equal to or less than the outer diameter.

The first propulsor blade may be one propulsor blade in an array of at least nine propulsor blades included as part of the first open propulsor rotor.

The first propulsion system may also include an open guide vane structure axially next to the first open propulsor rotor along the first rotational axis.

The first propulsor blade may be configured to rotate about the first rotational axis in the first rotational direction through a second blade reference position in a second reference direction away from a second reference point on the fuselage. The first propulsor blade may be oriented vertically at the second blade reference position. The second reference point may be located vertically between a centerline of the fuselage and the first blade tip when the first propulsor blade is at the second blade reference position. The second reference point may be coincident with the first plane of rotation at a second vertical periphery of the fuselage.

The first propulsor blade may be configured to rotate about the first rotational axis in the first rotational direction through a second blade reference position in a second reference direction away from a second reference point on the fuselage. The first propulsor blade may be oriented vertically at the second blade reference position. The first blade tip may be located vertically between a centerline of the fuselage and the second reference point when the first propulsor blade is at the second blade reference position. The second reference point may be coincident with the first plane of rotation at a second vertical periphery of the fuselage.

The first propulsor blade may be configured to rotate about the first rotational axis in the first rotational direction through a second blade reference position in a second reference direction away from a second reference point on the fuselage. The first propulsor blade may be oriented vertically at the second blade reference position. The first blade tip may be vertically aligned with the second reference point when the first propulsor blade is at the second blade reference position. The second reference point may be coincident with the first plane of rotation at a second vertical periphery of the fuselage.

The second vertical periphery of the fuselage may be vertically opposite the first vertical periphery of the fuselage.

The aircraft may also include a second propulsion system mounted to the airframe to a lateral second side of the fuselage that is laterally opposite the lateral first side of the fuselage. The second propulsion system may include a second open propulsor rotor. The second open propulsor rotor may be configured to rotate about a second rotational axis in a second rotational direction within a second plane of rotation. The second propulsor rotor may include a second propulsor blade with a second blade tip and a second blade span. The second propulsor blade may be configured to rotate about the second rotational axis in the second rotational direction through a second blade reference position. The second propulsor blade may be oriented vertically at the second blade reference position. The second blade tip may be vertically offset from the first reference point by a second offset distance when the second propulsor blade is at the second blade reference position. The second offset distance may be equal to or less than fifty percent of the second blade span.

The second rotational direction may be opposite the first rotational direction.

The second propulsor blade may be configured to rotate about the second rotational axis in the second rotational direction through the second blade reference position in a second reference direction towards the first reference point.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a perspective illustration of an aircraft with multiple propulsion systems mounted to wings of the aircraft.
FIG. 2 is a plan view illustration of the aircraft with its propulsion systems mounted to a fuselage of the aircraft.
FIG. 3 is a schematic illustration of an exemplary one of the propulsion systems.
FIG. 4 is a schematic illustration of a portion of the propulsion system of FIG. 3 at a propulsion section.
FIGS. 5A and 5B are front view illustrations of the aircraft depicting various symmetric propulsor rotating patterns.
FIG. 6 is a front view illustration of the aircraft depicting an asymmetric propulsor rotating pattern.
FIG. 7 is a schematic illustration of another aircraft.
FIGS. 8-13 are schematic illustrations of various aircraft fuselage arrangements between the propulsion systems.
FIGS. 14 and 15 are schematic illustrations of various additional aircraft fuselage arrangements between the propulsion systems.

### DETAILED DESCRIPTION

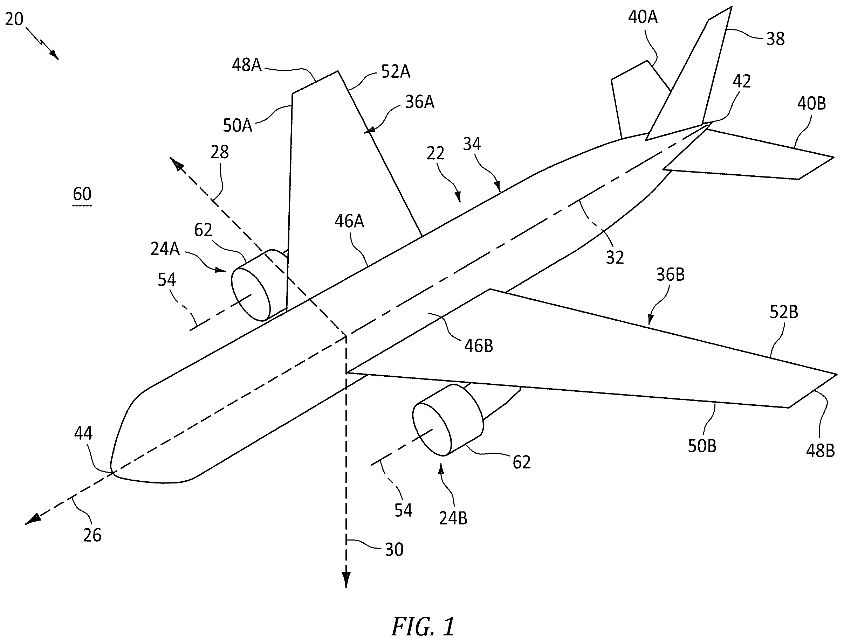

FIG. 1 is a perspective schematic illustration of an aircraft 20. This aircraft 20 may be an airplane, a drone (e.g., an unmanned aerial vehicle (UAV)), or any other manned or unmanned aerial vehicle or system. The aircraft 20 includes an aircraft airframe 22 and one or more aircraft propulsion systems 24A and 24B (generally referred to as "24"); e.g., a pair of companion aircraft propulsion systems. The aircraft 20 and its aircraft airframe 22 have a roll axis 26, a pitch axis 28 and a yaw axis 30. The roll axis 26 and the pitch axis 28 of FIG. 1 lay in and define a horizontal aircraft plane. This horizontal aircraft plane may be completely or substantially (e.g., within 5-10°) parallel with a horizon line and/or completely or substantially (e.g., within 5-10°) perpendicular to a force of gravity when, for example, the aircraft 20 is flying in (or close to) level flight and/or the aircraft 20 is on ground. The roll axis 26 of FIG. 1 is a longitudinally extending axis that may be parallel (e.g., coaxial) with, or slightly angularly offset (e.g., by less than 5° or 10°) vertically up or down from, a longitudinal centerline 32 of the aircraft 20 and its aircraft airframe 22. The pitch axis 28 of FIG. 1 is a laterally extending axis that is perpendicular to the roll axis 26. The yaw axis 30 of FIG. 1 is a vertically extending axis that is perpendicular to the roll axis 26 and the pitch axis 28 and, thus, perpendicular to the horizontal plane.

The aircraft airframe 22 of FIG. 1 includes an aircraft fuselage 34 and one or more aircraft wings 36A and 36B (generally referred to as "36"). This aircraft airframe 22 may also include one or more aircraft stabilizers, such as at least one vertical stabilizer 38 and one or more horizontal stabilizers 40A and 40B arranged at (e.g., on, adjacent or proximate) an aft, downstream tail end 42 of the aircraft fuselage 34. However, in other embodiments, it is contemplated one or more of the aircraft stabilizers 38, 40A and/or 40B may be omitted where, for example, the aircraft 20 is alternatively configured as a blended wing aircraft.

The aircraft fuselage 34 extends longitudinally along the aircraft centerline 32 from a forward, upstream nose end 44 of the aircraft airframe 22 and its aircraft fuselage 34 to the fuselage tail end 42. The aircraft fuselage 34 extends laterally between and to opposing lateral sides 46A and 46B (generally referred to as "46") of the aircraft fuselage 34.

The aircraft wings 36A and 36B are arranged to the opposing lateral sides 46A and 46B of the aircraft fuselage 34. The first aircraft wing 36A of FIG. 1, for example, is connected to the aircraft fuselage 34 at the fuselage first side 46A. The second aircraft wing 36B is connected to the aircraft fuselage 34 at the fuselage second side 46B. The aircraft fuselage 34 of FIG. 1 is thereby located laterally between the first aircraft wing 36A and the second aircraft wing 36B. Each of these aircraft wings 36A and 36B projects spanwise out from the aircraft fuselage 34 to a tip 48A, 48B of the respective aircraft wing 36A, 36B. Each of the aircraft wings 36A and 36B extends longitudinally between and to a leading edge 50A, 50B of the respective aircraft wing 36A, 36B and a trailing edge 52A, 52B of the respective aircraft wing 36A, 36B.

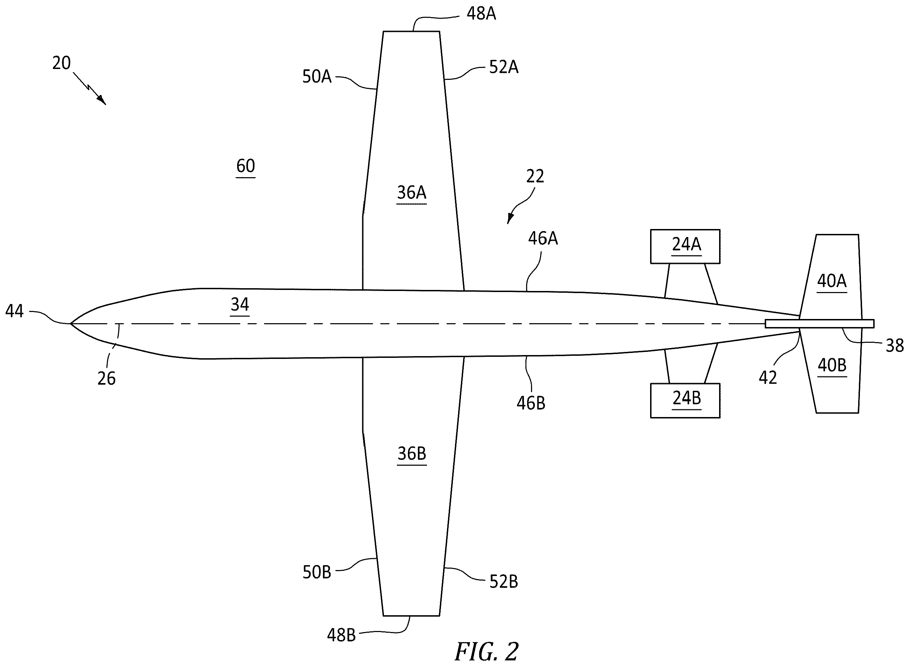

The aircraft propulsion systems 24A and 24B of FIG. 1 are mounted to the aircraft airframe 22 and arranged to the opposing lateral sides 46A and 46B of the aircraft fuselage 34. The first aircraft propulsion system 24A of FIG. 1, for example, is mounted to the first aircraft wing 36A. The second aircraft propulsion system 24B is mounted to the second aircraft wing 36B. The aircraft fuselage 34 of FIG. 1 is thereby located laterally between the first aircraft propulsion system 24A and the second aircraft propulsion system 24B. The present invention, however, is not limited to such an exemplary arrangement. For example, referring to FIG. 2, the first aircraft propulsion system 24A may alternatively be mounted to the aircraft fuselage 34 at the fuselage first side 46A. The second aircraft propulsion system 24B may alternatively be mounted to the aircraft fuselage 34 at the fuselage second side 46B.

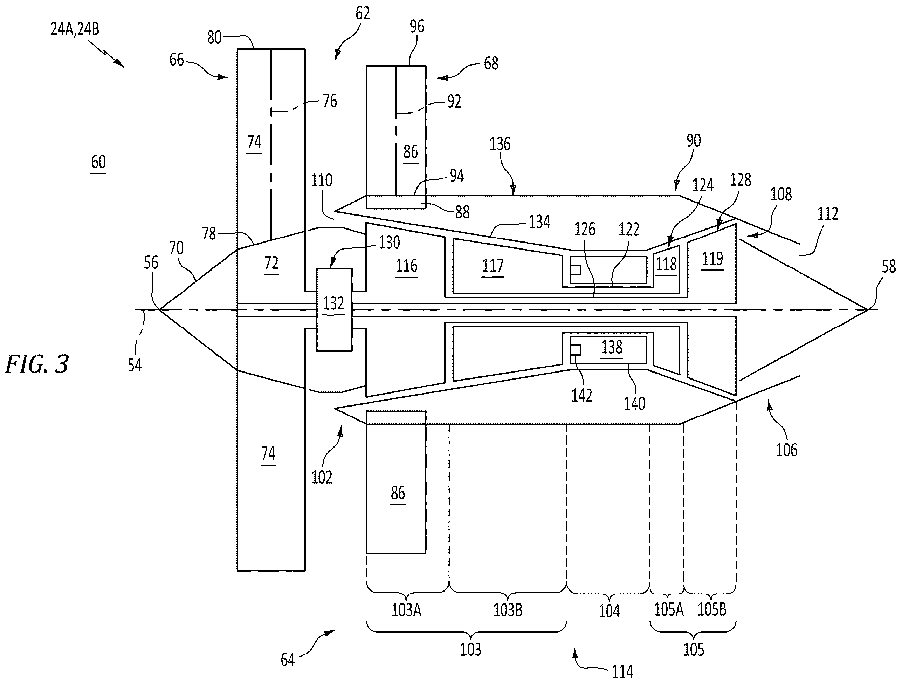

Referring to FIG. 3, each aircraft propulsion system 24 extends axially along an axis 54 between an upstream, forward end 56 of the aircraft propulsion system 24 and a downstream, aft end 58 of the aircraft propulsion system 24. The propulsion system axis 54 may be a centerline axis of the respective aircraft propulsion system 24 and/or a centerline axis of one or more members of the respective aircraft propulsion system 24. The propulsion system axis 54 may also or alternatively be a rotational axis of one or more members of the respective aircraft propulsion system 24.

Each aircraft propulsion system 24 may be configured as an open rotor propulsion system with a single open rotor and swirl recovery vane (SRV) architecture. Herein, the term "open" may describe a propulsion system section and/or a propulsion system component which is open to an environment 60 (e.g., an ambient environment) external to the aircraft propulsion system 24 and, more generally, the aircraft 20. The aircraft propulsion system 24 of FIG. 3, for example, includes an open rotor propulsion section 62 and a gas turbine engine 64.

The propulsion section 62 of FIG. 3 includes an open propulsor rotor 66 and an open guide vane structure 68. These propulsion section members 66 and 68 are un-ducted components of the aircraft propulsion system 24 and its propulsion section 62. The propulsion section 62 of FIG. 3 also includes a nose cone 70 disposed at (e.g., on, adjacent or proximate) the propulsion system forward end 56. Briefly, this nose cone 70 may be configured as a spinner which is rotatable with the propulsor rotor 66 about the propulsion system axis 54. Alternatively, the nose cone 70 may be configured as a stationary structure of the propulsion section 62.

The propulsor rotor 66 includes a rotor base 72 (e.g., a disk or a hub) and a plurality of open propulsor blades 74 (e.g., airfoils). The propulsor blades 74 are arranged and may be equispaced circumferentially about the rotor base 72 and the propulsion system axis 54 in an array; e.g., a circular array. This propulsor blade array may be unshrouded or alternatively shrouded by a tubular propulsor rotor shroud dedicated to the propulsor rotor 66 for example. The propulsor blade array and, more generally, the propulsor rotor 66 may include a total number of nine (9) or more (e.g., twelve (12) or more) of the propulsor blades 74. Each of the propulsor blades 74 is connected to (e.g., formed integral with or otherwise attached to) the rotor base 72. Each of the propulsor blades 74 projects spanwise along a span line 76 of the respective propulsor blade 74 (e.g., radially relative to the propulsion system axis 54) out from an exterior surface 78 of the rotor base 72, into the external environment 60, to a distal tip 80 of the respective propulsor blade 74. Each propulsor blade 74 is thereby configured as an un-ducted propulsor blade which is exposed to (e.g., disposed in) the surrounding external environment 60.

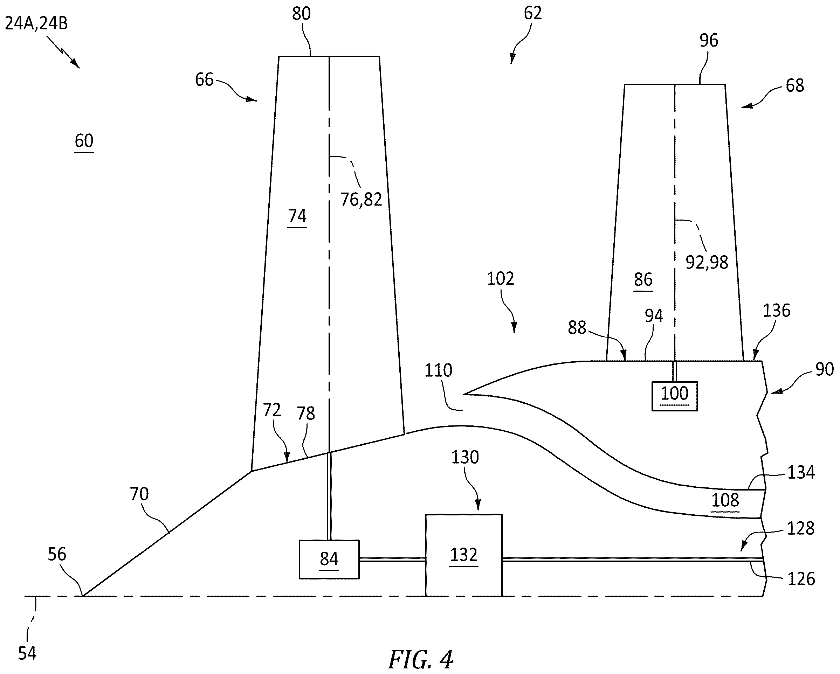

Referring to FIG. 4, each propulsor blade 74 may be configured to pivot about a respective blade pivot axis 82. This blade pivot axis 82 may generally extend radially relative to the propulsion system axis 54. Each propulsor blade 74 of FIG. 4 is operatively coupled with a blade actuation system 84. This blade actuation system 84 is configured to pivot each propulsor blade 74 about its respective blade pivot axis 82. By pivoting each propulsor blade 74 about its blade pivot axis 82, a pitch of the respective propulsor blade 74 may be changed. Of course, it is contemplated some or all of the propulsor blades 74 may be alternatively moved to change the propulsor blade pitch. Moreover, it is contemplated some or all of the propulsor blades 74 may alternatively be fixed pitch propulsor blades in other embodiments.

The guide vane structure 68 of FIG. 3 includes a plurality of open exit guide vanes 86 (e.g., airfoils) that are arranged and may be equispaced circumferentially about the propulsion system axis 54 in an array; e.g., a circular array. This guide vane array may be unshrouded or alternatively shrouded by a tubular guide vane shroud dedicated to the guide vane structure 68 for example. The guide vane structure 68 and its guide vanes 86 are arranged axially next to (e.g., adjacent) the propulsor rotor 66 and its propulsor blades 74. The guide vane structure 68 and its guide vanes 86 of FIG. 3, for example, are arranged downstream of the propulsor rotor 66 and its propulsor blades 74, without (e.g., any) other elements axially therebetween to obstruct, turn and/or otherwise influence the air propelled by the propulsor rotor 66 to the guide vane structure 68 for example. Each of the guide vanes 86 of FIG. 3 is coupled to a support structure 88 of a stationary housing structure 90 for the aircraft propulsion system 24. This support structure 88 may be configured as or otherwise include a support frame, a case and/or another fixed structure of the housing structure 90. Each of the guide vanes 86 projects spanwise along a span line 92 of the respective guide vane 86 (e.g., radially relative to the propulsion system axis 54) out from an exterior surface 94 of the housing structure 90, into the external environment 60, to a distal tip 96 of the respective guide vane 86. Here, the exterior surface 94 radially borders the external environment 60 and forms an exterior aerodynamic flow surface of the aircraft propulsion system 24. Each guide vane 86 is thereby configured as an un-ducted guide vane which is exposed to (e.g., disposed in) the surrounding external environment 60.

Referring to FIG. 4, each guide vane 86 may be configured to pivot about a respective vane pivot axis 98. This vane pivot axis 98 may generally extend radially relative to the propulsion system axis 54. Each guide vane 86 of FIG. 4 is operatively coupled with a vane actuation system 100. This vane actuation system 100 may be discrete from or integrated as a functional part of the blade actuation system 84. The vane actuation system 100 is configured to pivot each guide vane 86 about its respective vane pivot axis 98. By pivoting each guide vane 86 about its vane pivot axis 98, a pitch of the respective guide vane 86 may be changed. Of course, it is contemplated some or all of the guide vanes 86 may be alternatively moved to change the guide vane pitch. Moreover, it is contemplated some or all of the guide vanes 86 may alternatively be fixed pitch guide vanes in other embodiments.

Referring to FIG. 3, the turbine engine 64 includes an inlet section 102, a compressor section 103, a combustor section 104, a turbine section 105 and an exhaust section 106. The compressor section 103 of FIG. 3 includes a low pressure compressor (LPC) section 103A and a high pressure compressor (HPC) section 103B. The turbine section 105 of FIG. 3 includes a high pressure turbine (HPT) section 105A and a low pressure turbine (LPT) section 105B. The turbine engine 64 also includes an (e.g., annular) engine flowpath 108 which extends longitudinally through the aircraft propulsion system 24 of FIG. 3 and its turbine engine 64 from an airflow inlet 110 into the engine flowpath 108 to a combustion products exhaust 112 from the engine flowpath 108. The flowpath inlet 110 is also an airflow inlet into the aircraft propulsion system 24 of FIG. 3 and its turbine engine 64. The flowpath exhaust 112 is also a combustion products exhaust from the aircraft propulsion system 24 of FIG. 3 and its turbine engine 64. At least (or only) the LPC section 103A, the HPC section 103B, the combustor section 104, the HPT section 105A and the LPT section 105B collectively form a core 114 (e.g., a gas generator) of the turbine engine 64.

Each of the engine sections 103A, 103B, 105A and 105B includes a respective bladed rotor 116-119; e.g., a ducted and/or shrouded engine rotor. Each of these engine rotors 116-119 includes a rotor base (e.g., a disk or a hub) and a plurality of rotor blades (e.g., airfoils, vanes, etc.). The rotor blades are arranged and may be equispaced circumferentially around the respective rotor base in an array. The rotor blades may also be arranged into one or more stages longitudinally along the engine flowpath 108. Each of the rotor blades is connected to the respective rotor base. Each of the rotor blades projects radially (e.g., spanwise) out from the respective rotor base into the engine flowpath 108 and to a distal tip of the respective rotor blade.

The HPC rotor 117 is coupled to and rotatable with the HPT rotor 118. The HPC rotor 117 of FIG. 3, for example, is connected to the HPT rotor 118 by a high speed shaft 122. At least (or only) the HPC rotor 117, the HPT rotor 118 and the high speed shaft 122 collectively form a high speed rotating structure 124; e.g., a high speed spool of the turbine engine 64 and its engine core 114. This high speed rotating structure 124 of FIG. 3 and its members 117, 118 and 122 are rotatable about the propulsion system axis 54. However, in other embodiments, the high speed rotating structure 124 and its members 117, 118 and 122 may alternatively be rotatable about another rotational axis which is (e.g., radially and/or angularly) offset from the rotational axis of the propulsor rotor 66.

The LPC rotor 116 is coupled to and rotatable with the LPT rotor 119. The LPC rotor 116 of FIG. 3, for example, is connected to the LPT rotor 119 by a low speed shaft 126. At least (or only) the LPC rotor 116, the LPT rotor 119 and the low speed shaft 126 collectively form a low speed rotating structure 128; e.g., a low speed spool of the turbine engine 64 and its engine core 114. This low speed rotating structure 128 of FIG. 3 and its members 116, 119 and 126 are rotatable about the propulsion system axis 54. However, in other embodiments, the low speed rotating structure 128 and its members 116, 119 and 126 may alternatively be rotatable about another rotational axis which is (e.g., radially and/or angularly) offset from the rotational axis of the propulsor rotor 66.

The low speed rotating structure 128 is coupled to the propulsor rotor 66 through a drivetrain 130. This drivetrain 130 may be configured as a geared drivetrain, where a geartrain 132 (e.g., a transmission, a speed change device, an epicyclic geartrain, etc.) is disposed between and operatively couples the propulsor rotor 66 to the low speed rotating structure 128 and its LPT rotor 119. With this arrangement, the propulsor rotor 66 may rotate at a different (e.g., slower) rotational speed than the low speed rotating structure 128 and its LPT rotor 119. Here, the propulsor rotor 66 and the low speed rotating structure 128 may rotate in a common (the same) direction about the propulsion system axis 54 or in opposite directions about the propulsion system axis 54 depending, for example, upon the specific configuration of the geartrain 132. Alternatively, the drivetrain 130 may be configured as a direct-drive drivetrain, where the geartrain 132 is omitted. With such an arrangement, the propulsor rotor 66 rotates at a common (the same) rotational speed as the low speed rotating structure 128 and its LPT rotor 119.

The engine sections 102-106 of FIG. 3 are arranged sequentially along the propulsion system axis 54 and are housed within and/or formed by the housing structure 90. This housing structure 90 includes an engine case 134 (e.g., a gas generator case) and a nacelle 136. The engine case 134 houses one or more of the engine sections 103A-105B; e.g., the engine core 114. The engine case 134 of FIG. 3, for example, extends axially along (e.g., axially overlaps) and extends circumferentially about (e.g., circumscribes) the engine sections 103A-105B and the bladed rotors 116-119. The engine case 134 may also house the geartrain 132. The nacelle 136 houses and provides an aerodynamic cover over the engine case 134. An exterior wall of the nacelle 136 of FIG. 3, for example, is disposed radially outboard of, extends axially along (e.g., axially overlaps) and extends circumferentially about (e.g., circumscribes) the engine core 114 and its engine case 134. This nacelle wall may at least partially or completely form the exterior surface 94. With the foregoing arrangement, the bladed rotors 116-119 are disposed within the housing structure 90. By contrast, the propulsor rotor 66 and the guide vane structure 68 are disposed at least partially (or completely) outside of the housing structure 90.

During operation of the aircraft propulsion system 24 of FIG. 3, ambient air within the external environment 60 is propelled by the rotating propulsor rotor 66 in the downstream, aft direction towards the propulsion system aft end 58. A major portion (e.g., more than 50%) of this air bypasses the turbine engine 64 to provide forward thrust while a minor portion (e.g., less than 50%) of the air flows into the turbine engine 64. For example, an outer stream of the air propelled by the rotating propulsor rotor 66 flows axially across the guide vane structure 68 and outside of the housing structure 90 and its exterior surface 94; e.g., along an exterior of the nacelle 136. The guide vane structure 68 conditions (e.g., straightens out, de-swirls, etc.) the outer stream of air within the external environment 60 to enhance the forward thrust. By contrast, an inner stream of the air propelled by the rotating propulsor rotor 66 may bypass the guide vane structure 68 and enter the turbine engine 64 and its engine flowpath 108 through the flowpath inlet 110. The air entering the engine flowpath 108 through the flowpath inlet 110 may be referred to as "core air".

The core air is compressed by the LPC rotor 116 and the HPC rotor 117 and directed into a combustion chamber 138 (e.g., an annular combustion chamber) of a combustor 140 (e.g., an annular combustor) in the combustor section 104. Fuel is injected into the combustion chamber 138 by one or more fuel injectors 142 and mixed with the compressed core air to provide a fuel-air mixture. This fuel-air mixture is ignited and combustion products thereof flow through and sequentially drive rotation of the HPT rotor 118 and the LPT rotor 119. The rotation of the HPT rotor 118 and the LPT rotor 119 respectively drive rotation of the HPC rotor 117 and the LPC rotor 116 and, thus, compression of the core air. The rotation of the LPT rotor 119 also drives the rotation of the propulsor rotor 66 through the drivetrain 130. The turbine engine 64 and its low speed rotating structure 128 thereby power operation of (e.g., drive rotation of) the propulsor rotor 66 through the drivetrain 130 during aircraft propulsion system operation.

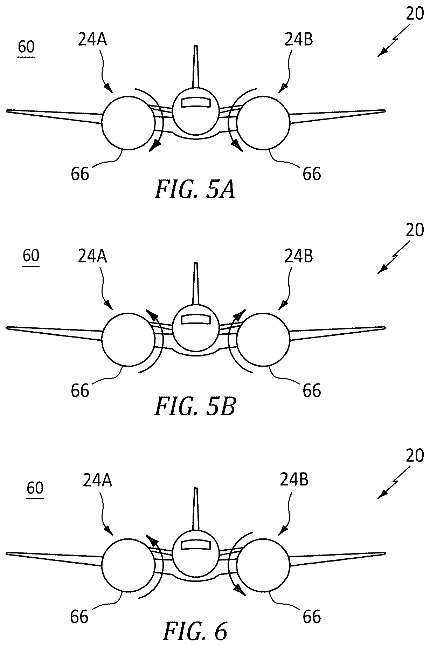

The first aircraft propulsion system 24A may be configured such that its propulsor rotor 66 rotates in a first rotational direction (e.g., clockwise or counterclockwise) about the respective propulsion system axis 54. By contrast, the second aircraft propulsion system 24B may be configured such that its propulsor rotor 66 rotates in a second rotational direction (e.g., counterclockwise or clockwise) about the respective propulsion system axis 54, which second rotational direction is rotationally opposite the first rotational direction. Referring to FIGS. 5A and 5B, the propulsor rotor 66 of the first aircraft propulsion system 24A and the propulsor rotor 66 of the second aircraft propulsion system 24B may thereby rotate in different rotational directions during aircraft flight. In FIG. 5A, the propulsor rotors 66 of the aircraft propulsion systems 24A and 24B rotate in an inboard down-down symmetric rotating pattern. In FIG. 5B, the propulsor rotors 66 of the aircraft propulsion systems 24A and 24B rotate in an inboard up-up symmetric rotating pattern. Such symmetric rotating patterns may facilitate a reduction in propulsion system noise, an increase in propulsion system performance, provision of symmetric control surface geometries, etc. The present invention, however, is not limited to such symmetric rotating patterns. For example, referring to FIG. 6, the propulsor rotors 66 of the aircraft propulsion systems 24A and 24B may alternatively rotate in an asymmetric rotating pattern. The propulsor rotors 66 of FIG. 6, for example, rotate in a common direction; e.g., the first rotational direction or the second rotational direction. However, for ease of description, the aircraft propulsion systems 24A and 24B may be described below with reference to the inboard down-down symmetric rotating pattern of FIG. 5A.

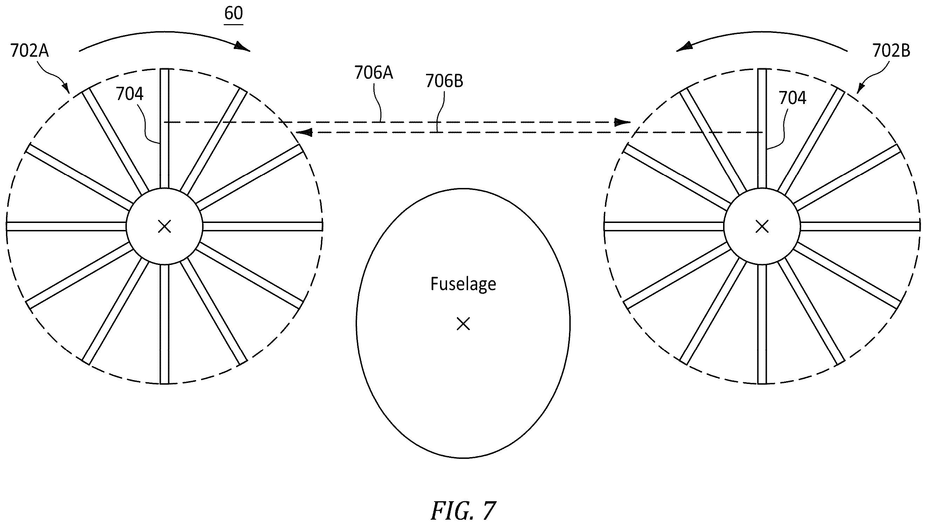

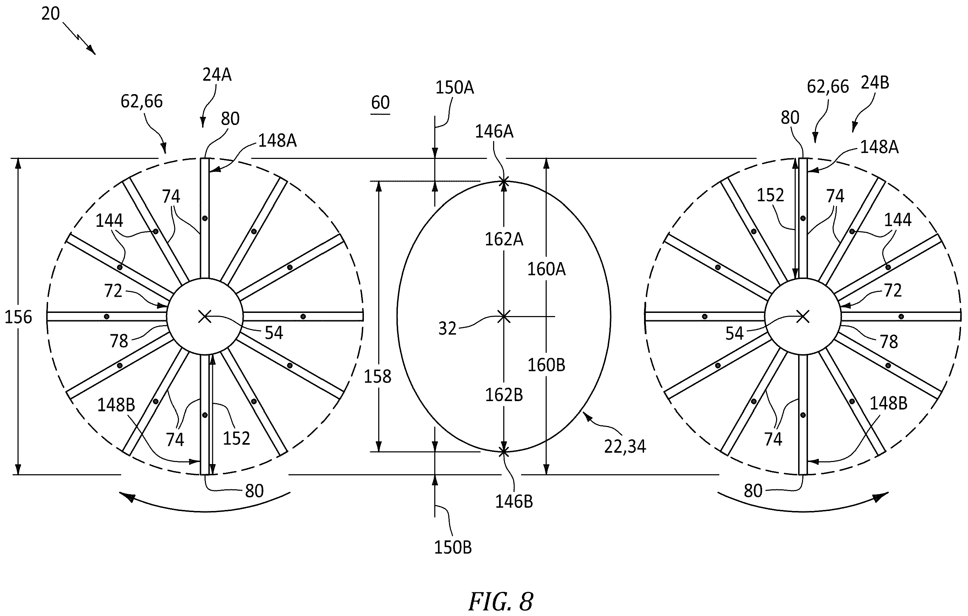

FIG. 7 illustrates a set of longitudinally aligned open propulsor rotors 702A and 702B (generally referred to as "702"). These propulsor rotors 702A and 702B are configured substantially without a barrier structure laterally between at least top halves of the propulsor rotors 702A and 702B. With such an arrangement, it may be possible for a propulsor blade or a fragment of a propulsor blade 704 to be thrown by one propulsor rotor 702A (or propulsor rotor 702B) and hit the other propulsor rotor 702B (or propulsor rotor 702A); e.g., see trajectory 706A, 706B. It may be possible therefore for one damaged propulsor rotor 702 to damage the other propulsor rotor 702 via cross propulsion system debris. To reduce or prevent the likelihood of such cross propulsion system debris damage, the aircraft fuselage 34 of FIG. 8 is configured laterally between the aircraft propulsion systems 24 as a cross propulsion system debris barrier.

Each propulsor rotor 66 of FIG. 8 defines a plane of rotation for the respective propulsor rotor 66; e.g., the plane of FIG. 8. This plane of rotation is perpendicular to the respective propulsion system axis 54 and may include a common blade reference point 144 along each of the propulsor blades 74. Though generally described and illustrated as having a plane of rotation perpendicular to the respective propulsion system axis 54, this is not intended to be so limiting, and it is contemplated that the plane of rotation may be substantially (e.g., within 5-15 degrees) perpendicular to the respective propulsion system axis 54. In such an arrangement, the propulsion systems 24 may be configured with an equal but opposite toe, or angle in a yaw axis of the respective propulsion system 24A, 24B. Each blade reference point 144 may be disposed at a common span location along a leading edge of the respective propulsor blade 74, a trailing edge of the respective propulsor blade 74, or at an intermediate location (e.g., a mid-point) along a mean line (e.g., a camber line) of the respective propulsor blade 74. Each plane of rotation of FIG. 8, when extended radially outward from the respective propulsor rotor 66, is coincident with one or more reference points 146A and 146B (generally referred to as "146") on the aircraft fuselage 34. These reference points 146 may or may not be common to (the same for) the planes of rotation of both aircraft propulsion systems 24. The top reference point 146A of FIG. 8 is disposed at a top vertical periphery of the aircraft fuselage 34; e.g., vertical top-most point of the aircraft fuselage 34 within the respective plane of rotation. The bottom reference point 146B of FIG. 8 is disposed at a bottom vertical periphery of the aircraft fuselage 34; e.g., vertical bottommost point of the aircraft fuselage 34 within the respective plane of rotation.

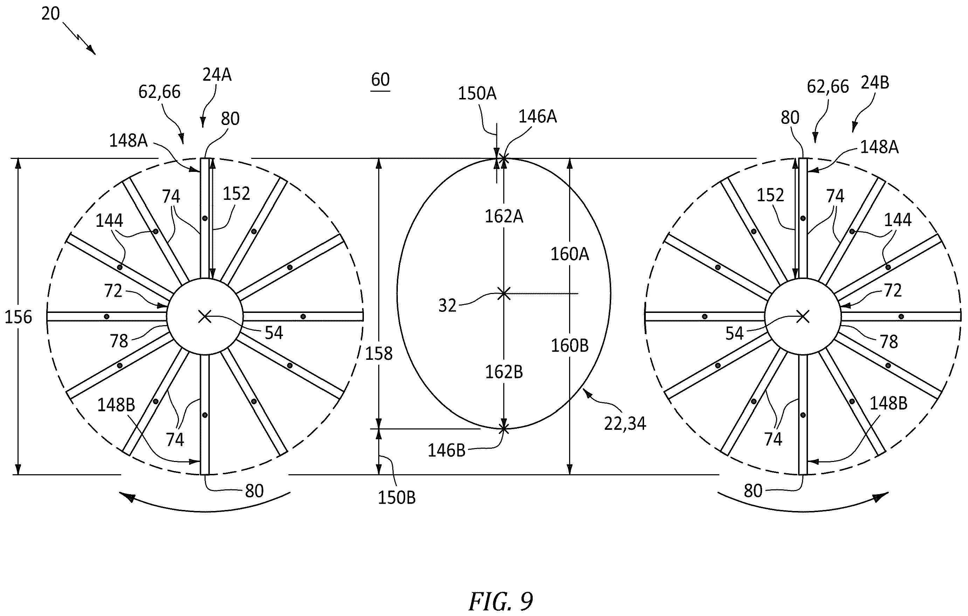

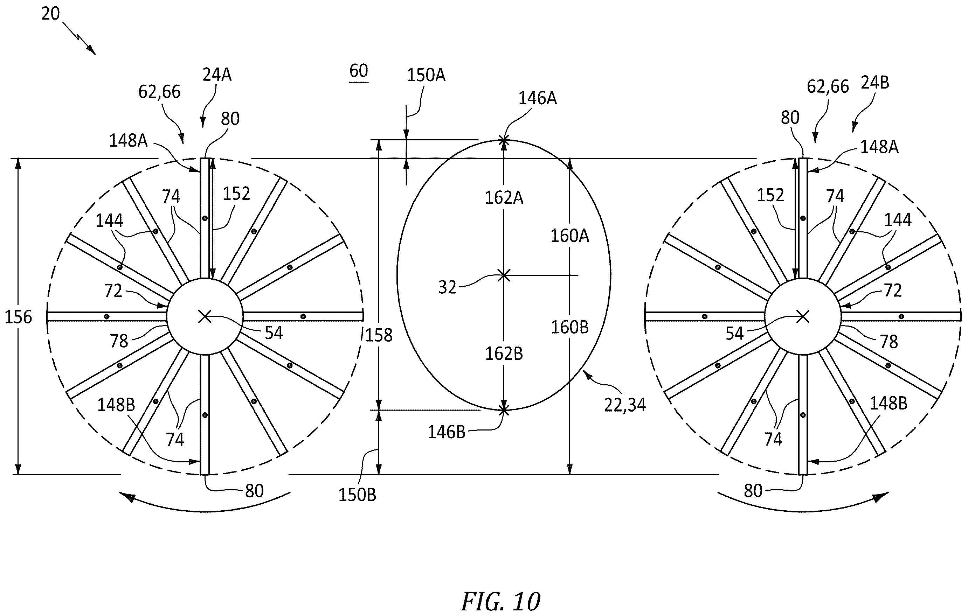

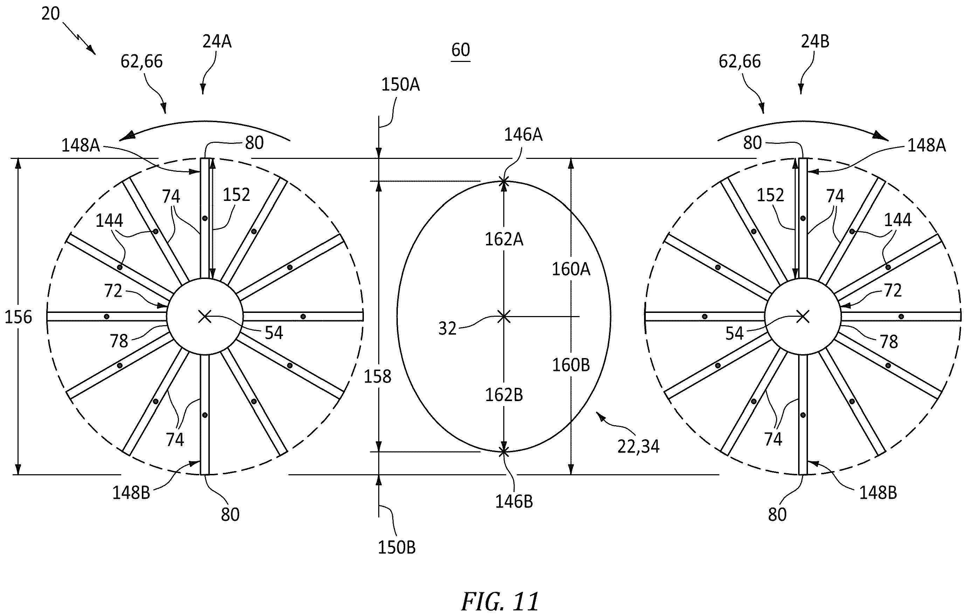

As each propulsor rotor 66 rotates about the respective propulsion system axis 54 in its respective rotational direction according to the inboard down-down symmetric rotating pattern of FIG. 5A, each of its propulsor blades 74 of FIG. 8 passes through a vertical top blade reference position 148A and a vertical bottom blade reference position 148B. These blade reference positions 148A and 148B (generally referred to as "148") are diametrically opposite, where the top blade reference position 148A is vertically above the bottom blade reference position 148B. When one of the propulsor blades 74 is in its top blade reference position 148A, that top positioned propulsor blade 74 is oriented vertically. The span line 76 (see FIG. 3) of the top positioned propulsor blade 74, for example, may be parallel to the yaw axis 30 and/or perpendicular to the horizontal aircraft plane formed by the roll axis 26 and the pitch axis 28 (see FIG. 1). As each propulsor blade 74 passes through the top blade reference position 148A, that propulsor blade 74 moves in an inboard reference direction laterally inboard towards the aircraft fuselage 34 and its top reference point 146A; see also FIGS. 9 and 10. Similarly, when one of the propulsor blades 74 is in its bottom blade reference position 148B, that bottom positioned propulsor blade 74 is oriented vertically. The span line 76 (see FIG. 3) of the bottom positioned propulsor blade 74, for example, may be parallel to the yaw axis 30 and/or perpendicular to the horizontal aircraft plane formed by the roll axis 26 and the pitch axis 28 (see FIG. 1). As each propulsor blade 74 passes through the bottom blade reference position 148B, that propulsor blade 74 moves in an outboard reference direction laterally outboard away from the aircraft fuselage 34 and its bottom reference point 146B; see also FIGS. 9 and 10. Alternatively referring to FIGS. 11-13, if one or more of the propulsor rotors 66 were to rotate about the respective propulsion system axis 54 in the opposite rotational direction of FIGS. 8-10, (a) each propulsor blade 74 passing through the bottom blade reference position 148B would move in the inboard reference direction laterally inboard towards the aircraft fuselage 34 and its bottom reference point 146B, and (b) each propulsor blade 74 passing through the top blade reference position 148A would move in the outboard reference direction laterally outboard away from the aircraft fuselage 34 and its top reference point 146A.

The aircraft fuselage 34 of FIGS. 8-10 is arranged relative to each propulsor rotor 66 such that the blade tip 80 of a respective propulsor blade 74 at the top blade reference position 148A is vertically offset from the top reference point 146A by a top offset distance 150A. This top offset distance 150A may be sized equal to or less than fifty percent (50%), thirty percent (30%) or ten percent (10%) of a blade span 152 of the respective propulsor blade 74. This blade span 152 may be measured along the span line 76 (see FIG. 3) of the respective propulsor blade 74 from the exterior surface 78 of the rotor base 72 to the blade tip 80 of the respective propulsor blade 74. Referring to FIG. 8, the top offset distance 150A may be a positive (+) offset distance where the top reference point 146A is disposed vertically between the aircraft centerline 32 and the blade tip 80 of the respective propulsor blade 74 at the top blade reference position 148A. Referring to FIG. 9, the top offset distance 150A may be a zero offset distance where the top reference point 146A is vertically aligned with the blade tip 80 of the respective propulsor blade 74 at the top blade reference position 148A. Referring to FIG. 10, the top offset distance 150A may be a negative (-) offset distance where the blade tip 80 of the respective propulsor blade 74 at the top blade reference position 148A is disposed vertically between the aircraft centerline 32 and the top reference point 146A. With the arrangement of FIGS. 9 and 10, the aircraft fuselage 34 completely blocks all straight line trajectories of propulsor blade(s) 74 or propulsor blade fragment(s) from one of the propulsor rotors 66 to the other one of the propulsor rotors 66. While some straight trajectories of propulsor blade fragment(s) from one of the propulsor rotors 66 to the other one of the propulsor rotors 66 are present with the arrangement of FIG. 8, the top offset distance 150A is minimized such that any blade fragment(s) or other debris which may be thrown from one propulsor rotor 66 towards the other will be small enough to cause little or any cross propulsion system debris damage. The aircraft fuselage 34 of FIGS. 8-10 is thereby configured to reduce or prevent the likelihood of cross propulsion system debris damage.

The blade tip 80 of a respective propulsor blade 74 at the bottom blade reference position 148B of FIGS. 8-10 is vertically offset from the bottom reference point 146B by a bottom offset distance 150B. This bottom offset distance 150B may be sized equal to or less than seventy percent (70%), fifty percent (50%) or thirty percent (30%) of the blade span 152 of the respective propulsor blade 74. This bottom offset distance 150B may be a positive (+) offset distance. The bottom reference point 146B of FIGS. 8-10, for example, may be disposed vertically between the aircraft centerline 32 and the blade tip 80 of the respective propulsor blade 74 at the bottom blade reference position 148B. The present invention, however, is not limited to such exemplary arrangements. For example, in other embodiments, the bottom offset distance 150B may be a zero offset distance where the bottom reference point 146B is vertically aligned with the blade tip 80 of the respective propulsor blade 74 at the bottom blade reference position 148B. In still another example, the bottom offset distance 150B may be a negative (-) offset distance where the blade tip 80 of the respective propulsor blade 74 at the bottom blade reference position 148B is disposed vertically between the aircraft centerline 32 and the bottom reference point 146B.

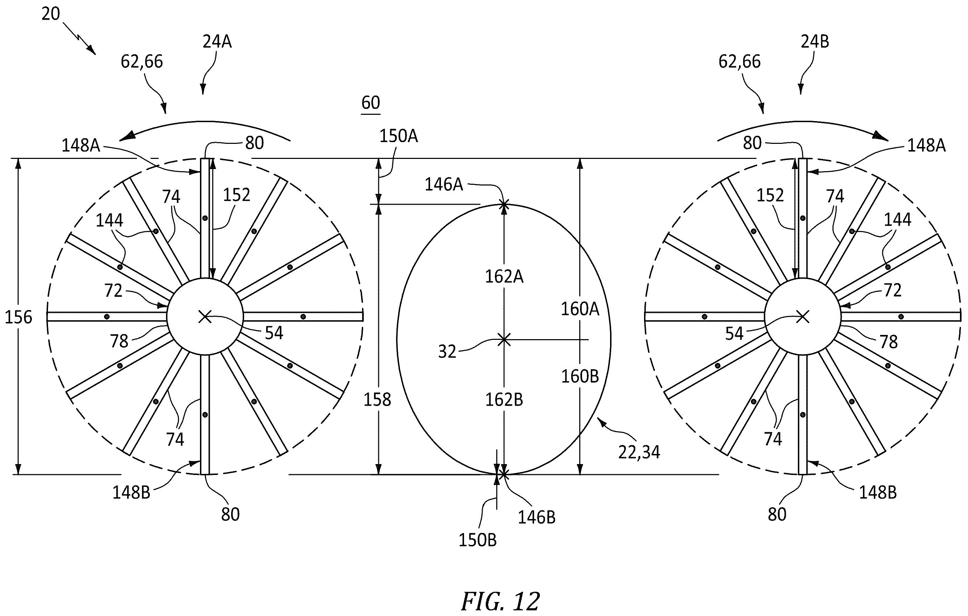

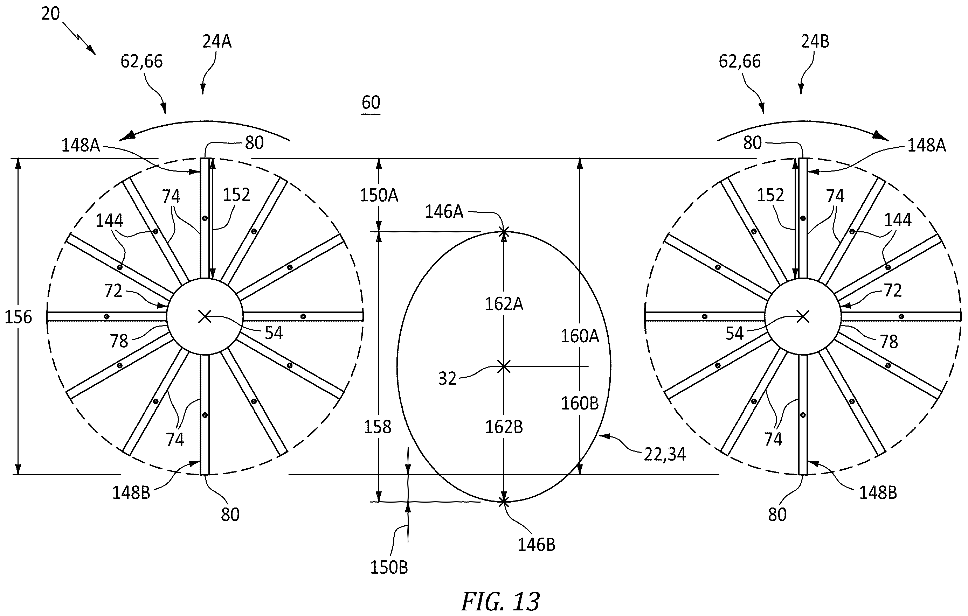

Referring now to FIGS. 11-13, the aircraft fuselage 34 is arranged relative to each propulsor rotor 66 such that the blade tip 80 of a respective propulsor blade 74 at the bottom blade reference position 148B is vertically offset from the bottom reference point 146B by the bottom offset distance 150B. This bottom offset distance 150B may be sized equal to or less than fifty percent (50%), thirty percent (30%) or ten percent (10%) of the blade span 152 of the respective propulsor blade 74. Referring to FIG. 11, the bottom offset distance 150B may be a positive (+) offset distance where the bottom reference point 146B is disposed vertically between the aircraft centerline 32 and the blade tip 80 of the respective propulsor blade 74 at the bottom blade reference position 148B. Referring to FIG. 12, the bottom offset distance 150B may be a zero offset distance where the bottom reference point 146B is vertically aligned with the blade tip 80 of the respective propulsor blade 74 at the bottom blade reference position 148B. Referring to FIG. 13, the bottom offset distance 150B may be a negative (-) offset distance where the blade tip 80 of the respective propulsor blade 74 at the bottom blade reference position 148B is disposed vertically between the aircraft centerline 32 and the bottom reference point 146B. With the arrangement of FIGS. 12 and 13, the aircraft fuselage 34 completely blocks all straight line trajectories of propulsor blade(s) 74 or propulsor blade fragment(s) from one of the propulsor rotors 66 to the other one of the propulsor rotors 66. While some straight trajectories of propulsor blade fragment(s) from one of the propulsor rotors 66 to the other one of the propulsor rotors 66 are present with the arrangement of FIG. 11, the bottom offset distance 150B is minimized such that any blade fragment(s) or other debris which may be thrown from one propulsor rotor 66 to the other will be small enough to cause little or any cross propulsion system debris damage. The aircraft fuselage 34 of FIGS. 11-13 is thereby configured to reduce or prevent the likelihood of cross propulsion system debris damage.

The blade tip 80 of a respective propulsor blade 74 at the top blade reference position 148A of FIGS. 11-13 is vertically offset from the top reference point 146A by the top offset distance 150A. This top offset distance 150A may be sized equal to or less than seventy percent (70%), fifty percent (50%) or thirty percent (30%) of the blade span 152 of the respective propulsor blade 74. This top offset distance 150A may be a positive (+) offset distance. The top reference point 146A of FIGS. 11-13, for example, may be disposed vertically between the aircraft centerline 32 and the blade tip 80 of the respective propulsor blade 74 at the top blade reference position 148A. The present invention, however, is not limited to such exemplary arrangements. For example, in other embodiments, the top offset distance 150A may be a zero offset distance where the top reference point 146A is vertically aligned with the blade tip 80 of the respective propulsor blade 74 at the top blade reference position 148A. In still another example, the top offset distance 150A may be a negative (-) offset distance where the blade tip 80 of the respective propulsor blade 74 at the top blade reference position 148A is disposed vertically between the aircraft centerline 32 and the top reference point 146A.

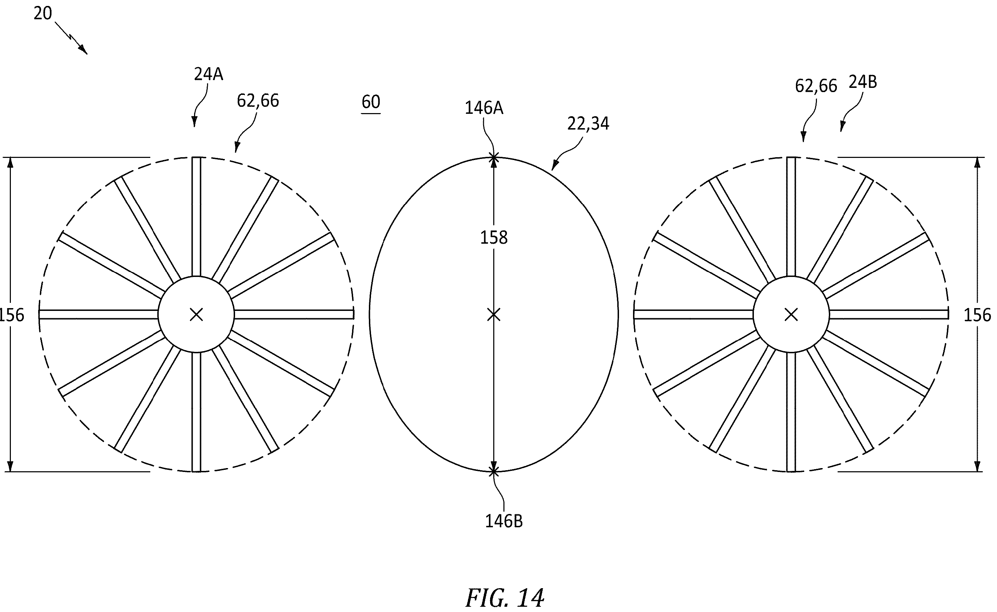

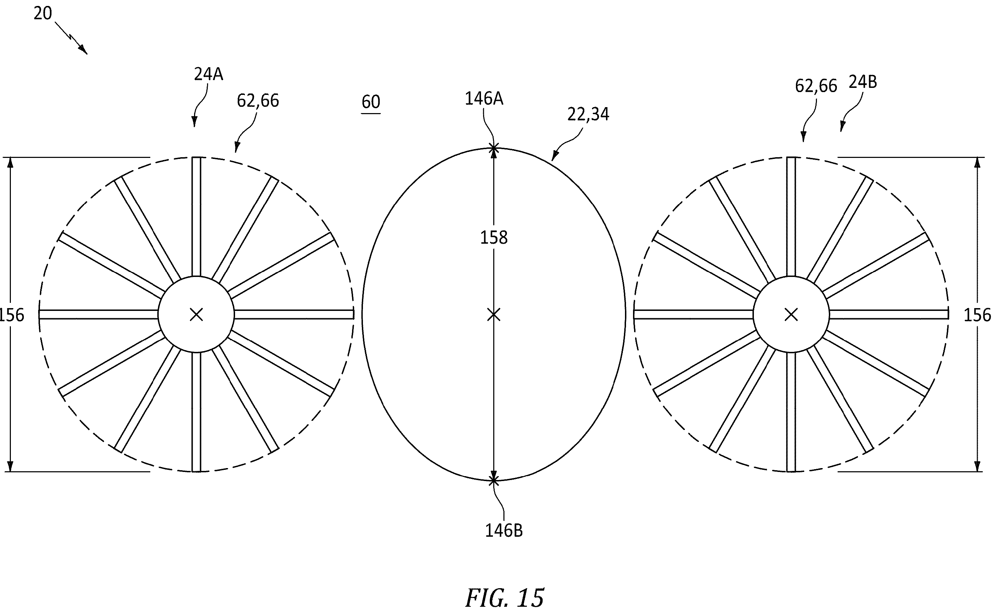

Referring to FIGS. 8-13, each propulsor rotor 66 has an outer diameter 156. This outer diameter 156 is two times a radius extending from the respective propulsion system axis 54 to a respective one of the blade tips 80. The aircraft fuselage 34 has a vertical height 158. This vertical height 158 extends vertically diametrically across the aircraft fuselage 34 between vertically outermost points of a respective section of the aircraft fuselage 34; e.g., from the bottom reference point 146B to the top reference point 146A. This vertical height 158 may be sized less than the outer diameter 156. More particularly, at least one value of the vertical height 158 may be sized less than the outer diameter 156. Here, the vertical height value may be equal to (a) the vertical height 158 at the reference point(s) 146A and/or 146B, (b) a maximum value of the vertical height 158 longitudinally along the aircraft airframe 22, or (c) a mean value of the vertical height 158 longitudinally along the aircraft airframe 22. The present invention, however, is not limited to such an exemplary arrangement. For example, referring to FIG. 14, the vertical height 158 may alternatively be sized equal to the outer diameter 156. In another example, referring to FIG. 15, the vertical height 158 may alternatively be sized greater than the outer diameter 156.

Referring to FIGS. 8-10, the blade tip 80 of a respective propulsor blade 74 at the top blade reference position 148A is vertically offset from the aircraft centerline 32 by a top blade tip distance 160A. The top reference point 146A is also vertically offset from the aircraft centerline 32 by a top reference point distance 162A. The top blade tip distance 160A may be sized equal to or less than 1.3 or 1.1 times the top reference point distance 162A to further reduce or prevent the likelihood of cross propulsion system debris damage. Similarly, referring to FIGS. 11-13, the blade tip 80 of a respective propulsor blade 74 at the bottom blade reference position 148B is vertically offset from the aircraft centerline 32 by a bottom blade tip distance 160B. The bottom reference point 146B is also vertically offset from the aircraft centerline 32 by a bottom reference point distance 162B. The bottom blade tip distance 160B may be sized equal to or less than 1.3 or 1.1 times the bottom reference point distance 162B to further reduce or prevent the likelihood of cross propulsion system debris damage.

Referring to FIG. 1, the propulsion system axes 54 of the aircraft propulsion systems 24A and 24B may be parallel to one another. Alternatively, the propulsion system axes 54 of the aircraft propulsion systems 24A and 24B may be angularly offset from one another when viewed, for example, in a horizontal reference plane. The propulsion system axes 54 of the aircraft propulsion systems 24A and 24B, for example, may be (e.g., slightly) toed in towards the aircraft centerline 32 (or toed out away from the aircraft centerline 32).

The engine flowpath 108 of FIG. 3 extends longitudinally from the flowpath inlet 110, sequentially through the inlet section 102, the LPC section 103A, the HPC section 103B, the combustor section 104, the HPT section 105A, the LPT section 105B and the exhaust section 106, to the flowpath exhaust 112. The engine flowpath 108 of FIG. 3 is configured such that the core air and the combustion products generally flow in the aft, downstream direction towards the propulsion system aft end 58. The core air and the combustion products thereby flow along with the ambient air propelled by the rotating propulsor rotor 66 in a common axial direction - the downstream, aft direction. The turbine engine 64 of the present invention, however, is not limited to such an exemplary common flow engine arrangement. For example, the engine flowpath 108 may alternatively be configured such that the core air and the combustion products generally flow in a forward, upstream direction towards the propulsion system forward end 56. The core air and the combustion products may thereby flow in an opposite direction as the ambient air propelled by the rotating propulsor rotor 66. Here, the turbine engine 64 may have a reverse flow engine arrangement.

The aircraft propulsion system 24 of FIG. 3 and its propulsion section 62 are described above with a tractor configuration; e.g., where the propulsor rotor 66 is disposed at or otherwise near the propulsion system forward end 56. It is contemplated, however, the propulsion section 62 may alternatively be disposed at or otherwise near the propulsion system aft end 58 to provide a pusher fan configuration. Moreover, while the turbine engine 64 is described above with a particular two rotating structure arrangement, the present invention is not limited thereto. For example, the LPC rotor 116 may be omitted to configure the LPT rotor 119 as a power turbine (PT) rotor for the propulsor rotor 66. In another example, the turbine engine 64 may also include another rotating structure; e.g., an intermediate speed spool for the engine core 114.

The guide vane structure 68 is described above as a fixed (e.g., non-rotatable) guide vane structure. It is contemplated, however, the guide vane structure 68 may alternatively be selectively rotatable about the respective propulsion system axis 54. With such an arrangement, each aircraft propulsion system 24 may be configured as an open rotor propulsion system with a swirl recovery blade (SRB) open rotor architecture. More particularly, each aircraft propulsion system 24 may operate as: (A) a counter-rotating open rotor (CROR) propulsion system during a dual rotor mode of operation (e.g., when both the propulsor rotor 66 and the structure 68 are counter-rotating about the respective propulsion system axis 54); and (B) a single open rotor and swirl recovery vane (SRV) propulsion system during a single rotor mode of operation (e.g., when the propulsor rotor 66 is rotating and the structure 68 is rotationally fixed about the respective propulsion system axis 54). Note, when the guide vane structure 68 is configured to selectively rotate about the respective propulsion system axis 54, the moving guide vanes 86 operate as propulsor blades 74.

The aircraft propulsion system 24 of FIG. 3 and its propulsion section 62 are described as including the guide vane structure 68 with an SRV or SRB configuration. The present invention, however, is not limited to such an exemplary propulsion system configuration. For example, each aircraft propulsion system 24 may alternatively be configured without an open guide vane structure. Each aircraft propulsion system 24 may thereby be configured as a single rotor (SR) open rotor propulsion system. In another example, each aircraft propulsion system 24 may alternatively be configured with a set of the open propulsor rotors (e.g., counter-rotating propulsor rotors) operatively coupled to the turbine engine 64 (see FIG. 3) through the geartrain 132. Each aircraft propulsion system 24 may thereby be configured as a counter-rotating open rotor (CROR) propulsion system.

While various embodiments of the present invention have been described, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An aircraft (20), comprising:
an airframe (22) comprising a longitudinally extending roll axis (26), a laterally extending pitch axis (28), a vertically extending yaw axis (30) and a fuselage (34); and
a first propulsion system (24A) mounted to the airframe (22) to a lateral first side (46A) of the fuselage (34), the first propulsion system (24A) comprising a first open propulsor rotor (66);
the first open propulsor rotor (66) configured to rotate about a first rotational axis (54) in a first rotational direction within a first plane of rotation, the first open propulsor rotor (66) comprising a first propulsor blade (74) with a first blade tip (80) and a first blade span (152), and the first propulsor blade (74) configured to rotate about the first rotational axis (54) in the first rotational direction through a first blade reference position (148A, 148B) in a first reference direction towards a first reference point (146A, 146B) on the fuselage (34);
the first propulsor blade (74) oriented vertically at the first blade reference position (148A, 148B), the first blade tip (80) vertically offset from the first reference point (146A, 146B) by a first offset distance (150A, 150B) when the first propulsor blade (74) is at the first blade reference position (148A, 148B), and the first offset distance (150A, 150B) equal to or less than fifty percent of the first blade span (152); and
the first reference point (146A, 146B) coincident with the first plane of rotation at a first vertical periphery of the fuselage (34).

2. The aircraft (20) of claim 1, wherein the first offset distance (150A, 150B) is equal to or less than thirty percent of the first blade span (152), wherein, optionally, the first offset distance (150A, 150B) is equal to or less than ten percent of the first blade span (152).

3. The aircraft (20) of claim 1 or 2, wherein:
the first reference point (146A, 146B) is located vertically between a centerline (32) of the fuselage (34) and the first blade tip (80) when the first propulsor blade (74) is at the first blade reference position (148A, 148B); or
the first blade tip (80) is located vertically between a centerline (32) of the fuselage (34) and the first reference point (146A, 146B) when the first propulsor blade (74) is at the first blade reference position (148A, 148B).

4. The aircraft (20) of claim 1 or 2, wherein the first blade tip (80) is vertically aligned with the first reference point (146A, 146B) when the first propulsor blade (74) is at the first blade reference position (148A, 148B).

5. The aircraft (20) of any preceding claim, wherein:
the first vertical periphery of the fuselage (34) is a top vertical periphery of the fuselage (34); or
the first vertical periphery of the fuselage (34) is a bottom vertical periphery of the fuselage (34).

6. The aircraft (20) of any preceding claim, wherein the first open propulsor rotor (66) has an outer diameter (156), and wherein:
the fuselage (34) has a vertical height (158) at the first reference point (146A, 146B) that is equal to or less than the outer diameter (156); and/or
the fuselage (34) has a mean vertical height (158) along a centerline (32) of the fuselage (34) that is equal to or less than the outer diameter (156).

7. The aircraft (20) of any preceding claim, wherein the first propulsor blade (74) is one propulsor blade (74) in an array of at least nine propulsor blades (74) included as part of the first open propulsor rotor (66).

8. The aircraft (20) of any preceding claim, wherein the first propulsion system (24A) further includes an open guide vane structure (68) axially next to the first open propulsor rotor (66) along the first rotational axis (54).

9. The aircraft (20) of any preceding claim, wherein the first propulsor blade (74) is configured to rotate about the first rotational axis (54) in the first rotational direction through a second blade reference position (148A, 148B) in a second reference direction away from a second reference point (146A, 146B) on the fuselage (34), wherein the first propulsor blade (74) is oriented vertically at the second blade reference position (148A, 148B), and wherein:
the second reference point (146A, 146B) is located vertically between a centerline (32) of the fuselage (34) and the first blade tip (80) when the first propulsor blade (74) is at the second blade reference position (148A, 148B), and the second reference point (146A, 146B) is coincident with the first plane of rotation at a second vertical periphery of the fuselage (34); or
the first blade tip (80) is located vertically between a centerline (32) of the fuselage (34) and the second reference point (146A, 146B) when the first propulsor blade (74) is at the second blade reference position (148A, 148B), and the second reference point (146A, 146B) is coincident with the first plane of rotation at a second vertical periphery of the fuselage (34).

10. The aircraft (20) of any of claims 1 to 8, wherein:
the first propulsor blade (74) is configured to rotate about the first rotational axis (54) in the first rotational direction through a second blade reference position (148A, 148B) in a second reference direction away from a second reference point (146A, 146B) on the fuselage (34);
the first propulsor blade (74) is oriented vertically at the second blade reference position (148A, 148B); and
the first blade tip (80) is vertically aligned with the second reference point (146A, 146B) when the first propulsor blade (74) is at the second blade reference position (148A, 148B), and the second reference point (146A, 146B) is coincident with the first plane of rotation at a second vertical periphery of the fuselage (34).

11. The aircraft (20) of any preceding claim, further comprising:
a second propulsion system (24B) mounted to the airframe (22) to a lateral second side (46B) of the fuselage (34) that is laterally opposite the lateral first side (46A) of the fuselage (34), the second propulsion system (24B) comprising a second open propulsor rotor (66);
the second open propulsor rotor (66) configured to rotate about a second rotational axis (54) in a second rotational direction within a second plane of rotation, the second propulsor rotor (66) comprising a second propulsor blade (74) with a second blade tip (80) and a second blade span (152), and the second propulsor blade (74) configured to rotate about the second rotational axis (54) in the second rotational direction through a second blade reference position (148A, 148B); and
the second propulsor blade (74) oriented vertically at the second blade reference position (148A, 148B), the second blade tip (80) vertically offset from the first reference point (146A, 146B) by a second offset distance (150A, 150B) when the second propulsor blade (74) is at the second blade reference position (148A, 148B), and the second offset distance (150A, 150B) equal to or less than fifty percent of the second blade span (152).

12. An aircraft (20), comprising:
an airframe (22) comprising a longitudinally extending roll axis (26), a laterally extending pitch axis (28), a vertically extending yaw axis (30) and a fuselage (34); and
a first propulsion system (24A) mounted to the airframe (22) to a lateral first side (46A) of the fuselage (34), the first propulsion system (24A) comprising a first open propulsor rotor (66) and a first open guide vane structure (68) next to the first open propulsor rotor (66);
the first open propulsor rotor (66) configured to rotate about a first rotational axis (54) in a first rotational direction within a first plane of rotation, the first open propulsor rotor (66) comprising a first propulsor blade (74) with a first blade tip (80), and the first propulsor blade (74) configured to rotate about the first rotational axis (54) in the first rotational direction through a first blade reference position (148A, 148B) in a first reference direction towards a first reference point (146A, 146B) on the fuselage (34);
wherein the first propulsor blade (74) is vertical at the first blade reference position (148A, 148B), and the first blade tip (80) is vertically offset from a centerline (32) of the fuselage (34) by a first blade tip distance (160A, 160B) when the first propulsor blade (74) is at the first blade reference position (148A, 148B);
wherein the first reference point (146A, 146B) is coincident with the first plane of rotation at a first vertical periphery of the fuselage (34), and the first reference point (146A, 146B) is vertically offset from the centerline (32) of the fuselage (34) by a first reference point distance (162A, 162B); and
wherein the first blade tip distance (160A, 160B) is equal to or less than 1.3 times the first reference point distance (162A, 162B).

13. The aircraft (20) of claim 12, wherein the first reference point (146A, 146B) is vertically between the centerline (32) of the fuselage (34) and the first blade tip (80) when the first propulsor blade (74) is at the first blade reference position (148A, 148B).

14. The aircraft (20) of claim 12, wherein the first blade tip (80) is one of:
vertically aligned with the first reference point (146A, 146B) when the first propulsor blade (74) is at the first blade reference position (148A, 148B); or
vertically between the centerline (32) of the fuselage (34) and the first reference point (146A, 146B) when the first propulsor blade (74) is at the first blade reference position (148A, 148B).

15. An aircraft (20), comprising:
an airframe (22) comprising a longitudinally extending roll axis (26), a laterally extending pitch axis (28), a vertically extending yaw axis (30) and a fuselage (34), the fuselage (34) having a mean vertical height (158) along a centerline (32) of the fuselage (34); and
a first propulsion system (24A) mounted to the airframe (22) to a lateral first side (46A) of the fuselage (34), the first propulsion system (24A) comprising a first open propulsor rotor (66) with an outer diameter (156) that is equal to or greater than the mean vertical height (158);
the first open propulsor rotor (66) configured to rotate about a first rotational axis (54) in a first rotational direction within a first plane of rotation, the first propulsor rotor (66) comprising a first propulsor blade (74) with a first blade tip (80), and the first propulsor blade (74) configured to rotate about the first rotational axis (54) in the first rotational direction through a first blade reference position (148A, 148B) in a first reference direction towards a first reference point (146A, 146B) on the fuselage (34);
wherein the first propulsor blade (74) is vertical at the first blade reference position (148A, 148B), and the first blade tip (80) is vertically offset from a centerline (32) of the fuselage (34) by a first blade tip distance (160A, 160B) when the first propulsor blade (74) is at the first blade reference position (148A, 148B);
wherein the first reference point (146A, 146B) is coincident with the first plane of rotation at a first vertical periphery of the fuselage (34), and the first reference point (146A, 146B) is vertically offset from the centerline (32) of the fuselage (34) by a first reference point distance (162A, 162B); and
wherein the first blade tip distance (160A, 160B) is equal to or less than 1.3 times the first reference point distance (162A, 162B).
